# EUROPEAN PATENT APPLICATION

(11) **EP 3 813 058 A1**
(43) Date of publication of application: **28.04.2021**
(21) Application number: 20166822.5
(22) Date of filing: 30.03.2020
(51) Int. Cl.: G09G 5/14, G06F 1/16, G09G 3/00

(54) **SCREEN DISPLAY DEVICE, METHOD AND DEVICE FOR CONTROLLING SCREEN DISPLAY AND STORAGE MEDIUM**

(30) Priority: 22.10.2019 CN 201911008256
(71) Applicant: Beijing Xiaomi Mobile Software Co., Haidian District, Beijing 100085 (CN)
(72) Inventor: NIE, Wei, Haidian District, 100085 (CN); GENG, Ruyue, Haidian District, Beijing 100085 (CN); ZHOU, Tongwei, Haidian District, Beijing 100085 (CN)
(74) Representative: Gevers Patents

(57) **Abstract**

The disclosure relates to a screen display device, a method and a device for controlling screen display and a storage medium. The screen display device includes: a curved screen, arranged on an obverse side, a lateral side and a reverse side of the screen display device and having a continuous curved surface; a display sub-system, provided with viewports of multiple display devices, the multiple display devices being independent from each other and the viewport of each display device corresponds to a different respective display area of the curved screen; a display control processor that allocates, to each of different application scenarios, a target display device corresponding to the application scenario, and processes interface contents of the application scenario and displays the processed interface contents of the application scenario in a viewport of the target display device to enable the interface contents of the application scenario to be displayed in a display area corresponding to the viewport. According to the embodiments of the disclosure, different application scenarios can be displayed in different areas of the curved screen, thus user experiences can be improved.

## Description

### TECHNICAL FIELD

The disclosure relates to the field of terminal display technology, and particularly to a screen display device, a method and device for controlling screen display and a storage medium.

### BACKGROUND

With the development of mobile communication technology, mobile terminals have become necessities in people's daily life. The terminals have increasingly improved hardware and software configurations including increasingly large display screens. Thus, screen display is a hot topic in research and development of the terminals.

### SUMMARY

In order to overcome problems in the related arts, the disclosure provides a screen display device, a method and a device for controlling screen display and a medium storage.

In one aspect, some embodiments of the disclosure provide a screen display device, including: a curved screen, arranged on an obverse side, a lateral side and a reverse side of the screen display device and having a continuous curved surface; a display sub-system, provided with viewports of multiple display devices, the multiple display devices being independent from each other and the viewport of each display device corresponding to a different respective display area of the curved screen; and a display control processor that allocates, to each of different application scenarios, a target display device, and processes interface contents of the application scenario and displays the processed interface contents of the application scenario in a viewport of the target display device to enable the interface contents of the application scenario to be displayed in a display area corresponding to the viewport.

The technical solutions provided in the embodiments of the disclosure may have the beneficial effects as follows. The display sub-system of the curved screen is provided with viewports of multiple display devices, which are independent from each other and the viewport of each display device corresponds to a different respective display area of the curved screen. The display control processor allocates, to each of different application scenarios, a target display device corresponding to the application scenario, and processes interface contents of the application scenario and displays the processed interface contents of the application scenario in a viewport of the target display device to enable the interface contents of the application scenario to be displayed in a display area corresponding to the viewport. According to the embodiments of the disclosure, different application scenarios can be displayed in different areas of the curved screen, thus user experiences can be improved.

In one particular embodiment, the display areas corresponding to the multiple viewports may not overlap with each other, or may partially overlap with each other.

In one particular embodiment, the multiple display devices may correspond to the viewports for displaying different types of windows; and the different application scenarios correspond to different types of windows.

In another aspect, some embodiments of the disclosure provide a method for controlling screen display, which is applied to the above screen display device. The method for controlling screen display includes the following operations: an application scenario of interface contents to be displayed is determined and a corresponding target display device is allocated to the application scenario; the interface contents of the application scenario are processed to enable the processed interface contents of the application scenario to be displayed in a viewport of the target display device; and the processed interface contents of the application scenario are displayed in a display area corresponding to the viewport.

The advantages and technical effects of the method according to the invention correspond to those of the device presented above.

In one particular embodiment, the operation that the corresponding target display device is allocated to the application scenario may include: the target display device corresponding to a type of window that corresponds to the application scenario is allocated to the application scenario.

In one particular embodiment, the operation that the interface contents of the application scenario are processed to enable the processed interface contents of the application scenario to be displayed in the viewport of the target display device may include: a display size of the interface contents of the application scenario and a display position of the interface contents are determined according to the viewport of the target display device; and the interface contents of the application scenario are processed according to the display size and the display position.

In one particular embodiment, the operation that the processed interface contents of the application scenario are displayed in the display area corresponding to the viewport may include: when the target display device has more than one viewport, the interface contents of the application scenario displayed in the more than one viewport of the target display device are displayed, with or without an overlap, in one or more display areas corresponding to the more than one viewport.

In one particular embodiment, that operation that the interface contents of the application scenario displayed in the more than one viewport of the target display device are displayed with the overlap in the one or more display areas corresponding to the more than one viewport may include: a priority, according to which the more than one viewport of the target display device is displayed in the display areas, is determined; and the interface contents of the application scenario displayed in the more than one viewport of the target display device are displayed hierarchically in a same display area from outside to inside in a descending order of the priority.

In one particular embodiment, the priority may be determined according to a priority set by a user; or the priority may be determined according to sizes of the viewports, herein the priority of a small-size viewport is greater than the priority of a large-size viewport.

In another aspect, some embodiments of the disclosure provides a device for controlling screen display, which is applied to a screen display device that is any one of the above screen display device. The device for controlling screen display includes the following modules: a determination module, configured to determine an application scenario of interface contents to be displayed and allocate a corresponding target display device to the application scenario; a processing module, configured to process the interface contents of the application scenario to enable the processed interface contents of the application scenario to be displayed in a viewport of the target display device; and a display module, configured to display the processed interface contents of the application scenario in a display area corresponding to the viewport.

In one particular embodiment, the determination module may allocate the corresponding target display device to the application scenario by a following way: the target display device corresponding to a type of window that corresponds to the application scenario is allocated to the application scenario.

In one particular embodiment, the processing module may process the interface contents of the application scenario by a following way to enable the processed interface contents of the application scenario to be displayed in the viewport of the target display device: a display size of the interface contents of the application scenario and a display position of the interface contents are determined according to the viewport of the target display device; and the interface contents of the application scenario are processed according to the display size and the display position.

In one particular embodiment, the display module may display the processed interface contents of the application scenario in the display area corresponding to the viewport by a following way: when the target display device has more than one viewport, the interface contents of the application scenario displayed in the more than one viewport of the target display device are displayed, with or without an overlap, in the one or more display areas corresponding to the more than one viewport.

In one particular embodiment, the display module may display, with an overlap in the one or more display areas corresponding to the more than one viewport, the interface contents of the application scenario displayed in the more than one viewport of the target display device by a following way: a priority, according to which the more than one viewport of the target display device is displayed in the display areas, is determined; and the interface contents of the application scenario displayed in the more than one viewport of the target display device are displayed hierarchically in a same display area from outside to inside in a descending order of the priority.

In one particular embodiment, the priority may be determined according to a priority set by a user; or the priority may be determined according to sizes of the viewports, herein the priority of a small-size viewport is greater than the priority of a large-size viewport.

In another aspect, some embodiments of the disclosure provide a device for controlling screen display, including: a processor; a memory configured to store instructions executable by the processor. The processor is configured to perform any of the above-mentioned methods for controlling screen display.

In another aspect, some embodiments of the disclosure provide a non-transitory computer readable storage medium. When instructions stored in the non-transitory storage medium are executed by a processor of a mobile terminal, the mobile terminal is caused to perform any of the above-mentioned methods for controlling screen display.

The storage medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the storage medium can be an integrated circuit in which the program is incorporated, the circuit being adapted to execute the method in question or to be used in its execution.

It is to be understood that the above general description and detailed description below are only exemplary and explanatory and not intended to limit the present disclosure.

### BRIEF DESCRIPTION OF DRAWINGS

The accompanying drawings, which are incorporated in and constitute a part of this specification, illustrate embodiments consistent with the present disclosure and, together with the description, serve to explain the principles of the present disclosure.
FIG. 1 is a block diagram illustrating a screen display device according to an exemplary embodiment of the disclosure.
FIG. 2 is a system architecture diagram illustrating a screen display device according to an exemplary embodiment of the disclosure.
FIG. 3 is a flowchart illustrating a method for controlling screen display according to an exemplary embodiment of the disclosure.
FIG. 4 is a schematic diagram illustrating division of a display area of a curved screen according to an exemplary embodiment of the disclosure.
FIG. 5 is a block diagram illustrating a device for controlling screen display according to an exemplary embodiment of the disclosure.
FIG. 6 is a block diagram illustrating a device for controlling screen display according to an exemplary embodiment of the disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

With the development of the mobile communication technology, mobile terminals have become necessities in people's daily lives and their functions are improving day by day. A surrounding curved screen that surrounds a terminal completely was created following the double-sided screen, the full screen and the foldable screen.

With screens on an obverse side, a reverse side and a lateral side and a screen-to-body ratio greater than 180%, the surrounding curved screen overthrows the concept of the foldable screen. Display of the surrounding curved screen with a high screen-to-body ratio has become a research focus.

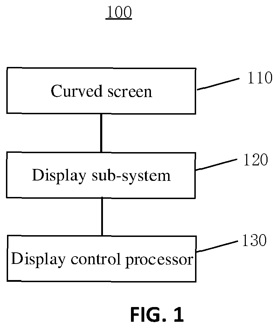

FIG. 1 is a block diagram illustrating a screen display device according to an exemplary embodiment of the disclosure. The screen display device is applied to a terminal device, such as a smart phone, a tablet or a wearable device, which uses a curved screen. The types of the terminal devices using the curved screen are not limited in embodiments of the disclosure.

As illustrated in FIG. 1, the screen display device 100 includes: a curved screen 110, a display sub-system 120 and a display control processor 130.

The curved screen 110 is arranged on an obverse side, a lateral side and a reverse side of the screen display device and having a continuous curved surface. The curved screen can be freely folded or unfolded. The curved screen in an unfolded state can be seen as a full display screen.

The display sub-system 120 is provided with viewports of multiple display devices.

The multiple display devices are independent from each other and the viewport of each display device corresponds to a different respective display area of the curved screen 110.

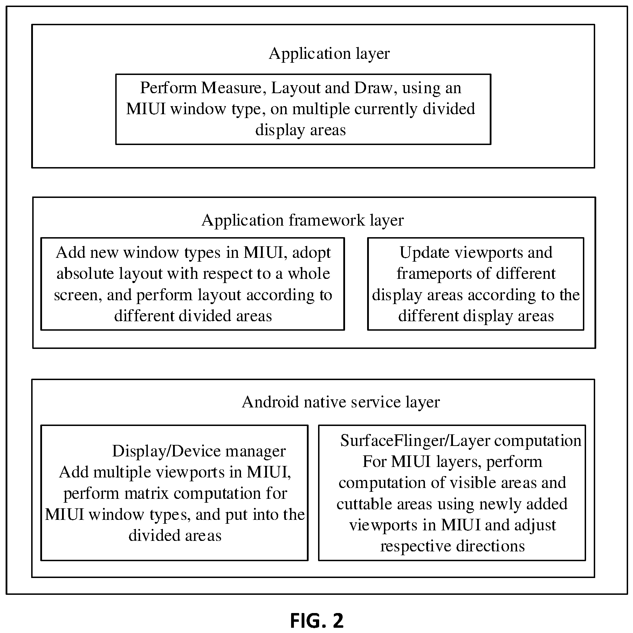

The above corresponding screen display device in the embodiment of the disclosure can use a system architecture of the screen display device illustrated in FIG. 2.

In an embodiment of the disclosure, the display sub-system 120 can be an MIUI system.

As illustrated in FIG. 2, in an embodiment of the disclosure, an application layer performs Measure, Layout and Draw, using an MIUI window type, on the multiple display devices into which the curved screen 110 is divided.

An application framework layer includes a window manager and a display manager. An absolute layout is adopted by the application layer with respect to the whole curved screen 110, and the layout is performed according to different display devices. The window manager of the application framework layer divides the curved screen 110 into different display areas and the display manager manages the different display areas of the curved screen 110. Viewports and frameports of the different display devices are updated by the application framework layer.

A display control processor 130 allocates, to each of different application scenarios, a target display device corresponding to the application scenario, and processes interface contents of the application scenario, and displays the processed interface contents of the application scenario in a viewport of the target display device to enable the interface contents of the application scenario to be displayed in a display area corresponding to the viewport.

It can be understood that different application scenarios correspond to different target display devices and one application scenario can correspond to one or more target display devices. Visible areas are computed, layer composition is performed, and drawing is performed.

As illustrated in FIG. 2, an Android Native Service layer includes a Display/Device manager, a SurfaceFlinger/Layer computation. For the MIUI layer, computation of visible areas and cuttable areas is performed on interface contents of an application scenario according to layers of viewports of the multiple display devices; display directions of the interface contents of the application scenario are adjusted; the layers of the viewports of the multiple display devices are composed, drawing is performed and the contents in the layers of the multiple display devices are updated so as to be displayed, so that the interface contents of the application scenario are displayed in a display area corresponding to the viewport.

In an embodiment of the disclosure, the display areas corresponding to the multiple the viewports do not overlap with each other, or partially overlap with each other. The display areas of the curved screen 110 corresponding to the viewports of the multiple display devices may not overlap with, or may partially overlap with each other.

In an embodiment of the disclosure, the multiple display devices correspond to the viewports for displaying different types of windows; and the different application scenarios correspond to different types of windows.

As illustrated in FIG. 2, the Display/Device manager configures the viewports of the multiple display devices and performs a matrix computation for the different window types of the different application scenarios to enable the interface contents of the application scenarios to be displayed in the display area corresponding to the viewport.

The display sub-system of the curved screen provided in the embodiments of the disclosure is provided with the viewports of the multiple display devices, which are independent from each other and the viewport of each display device corresponds to a different respective display area of the curved screen. The display control processor allocates, to each of different application scenarios, a target display device corresponding to the application scenario, and processes interface contents of the application scenario and displays the processed interface contents of the application scenario in a viewport of the target display device to enable the interface contents of the application scenario to be displayed in a display area corresponding to the viewport. According to the embodiments of the disclosure, different application scenarios can be displayed in different areas of the curved screen, thus user experiences can be improved.

Embodiments of the disclosure provide a method for controlling screen display with regard to the above-mentioned screen display device.

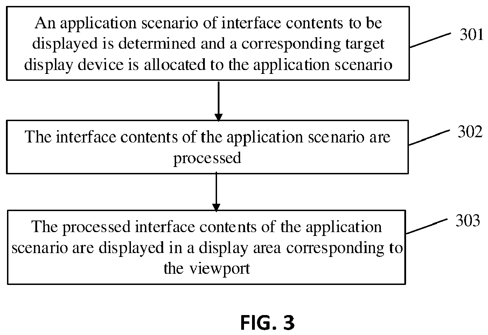

FIG. 3 is a flowchart illustrating a method for controlling screen display according to an exemplary embodiment of the disclosure. As illustrated in FIG. 3, the method for controlling screen display can be applied to a screen display device.

As illustrated in FIG. 3, the method for controlling screen display includes operations S301 to S303.

In operation S301, an application scenario of interface contents to be displayed is determined, and a corresponding target display device is allocated to the application scenario.

A curved screen is provided with viewports of multiple display devices, which are independent from each other, and the viewport of each display device corresponds to a different respective display area of the curved screen.

The viewport of the display device can be used to display an application scenario related to an application of a terminal device or to an operation system of the terminal device. In some embodiments of the disclosure, the interface contents to be displayed can be interface contents related to the application of the terminal device or to the operation system of the terminal device. For example, the interface contents according to the embodiments of the disclosure can be displayed as information in different application scenarios, such as card flow information, information of a navigation bar, an application installed in a terminal device, state information of a terminal device and a piece of wallpaper.

The interface contents of the application scenario are displayed in the curved screen. For example, when a user opens an application, the interface contents of the application scenario to be displayed are transmitted to a system service that allocates a corresponding target display device to the application scenario.

In operation S302, the interface contents of the application scenario are processed.

The processed interface contents of the application scenario are processed so as to adapt to the corresponding target display device so that the processed interface contents of the application scenario are displayed in a viewport of the target display device.

In operation S303, the processed interface contents of the application scenario are displayed in a display area corresponding to the viewport.

The display sub-system of the curved screen is provided with viewports of multiple display devices, which are independent from each other and the viewport of each display device corresponds to a different respective display area of the curved screen. The display control processor of the curved screen allocates, to each of different application scenarios, a target display device corresponding to the application scenario, and processes interface contents of the application scenario and displays the processed interface contents of the application scenario in a viewport of the target display device to enable the interface contents of the application scenario to be displayed in a display area corresponding to the viewport. According to the embodiments of the disclosure, different application scenarios can be displayed in different areas of the curved screen, thus user experiences can be improved.

In an embodiment of the disclosure, the target display device corresponding to a type of window that corresponds to the application scenario is allocated to the application scenario.

The application scenario can correspond to one or more types of windows, and the window types correspond to the display devices. In other word, different display devices correspond to viewports for displaying different types of windows. The application scenario can be displayed in different display devices.

In an embodiment of the disclosure, a display size of the interface contents of the application scenario and a display position of the interface contents are determined according to the viewport of the target display device; and the interface contents of the application scenario are processed according to the display size and the display position

The size and the display position of the interface contents of the application scenario can be processed. For example, it can be understood that the processing of the size of the interface contents of the application scenario is an adaptive adjustment of the size of the viewports of the target display device, and the processing of the display position of the interface contents of the application scenario is an adaptive adjustment of the display position of the interface contents of the application scenario in the viewports of the target display device.

In an embodiment of the disclosure, when the target display device has more than one viewport, the interface contents of the application scenario displayed in the more than one viewport of the target display device are displayed, with or without an overlap, in one or more display areas corresponding to the more than one viewport.

When the interface contents of the application scenario displayed in the more than one viewport of the target display device are displayed, without the overlap, in the one or more display areas corresponding to the more than one viewport, the processed interface contents of the application scenario are directly displayed in the one or more display areas corresponding to the more than one viewport, so as to prevent one viewport from being hidden by another viewport.

It can be understood that the displaying of the interface contents of the application scenario displayed in the more than one viewport of the target display device, with the overlap, in the one or more display areas corresponding to the more than one viewport is the displaying of the multiple viewports in one same display area, which implements the displaying in the multiple viewports.

In an embodiment of the disclosure, a priority, according to which the more than one viewport of the target display device is displayed in the display areas, is determined; the interface contents of the application scenario displayed in the more than one viewport of the target display device are displayed hierarchically in a same display area from outside to inside in a descending order of the priority.

For example, if the target display device has more than one viewport, the interface contents of the application scenario displayed in the more than one viewport of the target display device are displayed hierarchically in a same display area from outside to inside in a descending order of the priority of the viewport of multiple target display devices, herein the high-priority viewport of the target display device is displayed in an outer layer of the display area, which can be understood as being displayed in a topmost layer of the display area, thus the high-priority viewport can be completely displayed without being hidden. The low-priority viewport of the target display device is displayed in a lowest layer of a same display area and may be hidden completely or partially. In the disclosure, the priority of the viewport can be used to implement the hierarchical display of interface contents of the application scenario in the multiple viewports of the target display device.

In an embodiment of the disclosure, the priority is determined according to a priority set by a user; or the priority is determined according to sizes of the viewports, and the priority of a small-size viewport is greater than the priority of a large-size viewport.

The user can set the priority of the viewports of the target display device according to the interface contents of the application scenario which he/she actually needs to see. A highest priority is set for a viewport which needs to be seen completely, so that the high-priority viewport of target display device can be displayed in the outer layer of the display area without being hidden. A relatively low priority is set for the viewports which needs to be partially seen or do not need to be seen.

In another embodiment of the disclosure, the priority of the viewports of the target display device can be determined by a system service according to the sizes of the viewports of the target display device. The priority of the small-size viewport is greater than the priority of the large-size viewport so that the small-size viewport is not hidden by the large-size viewport from view.

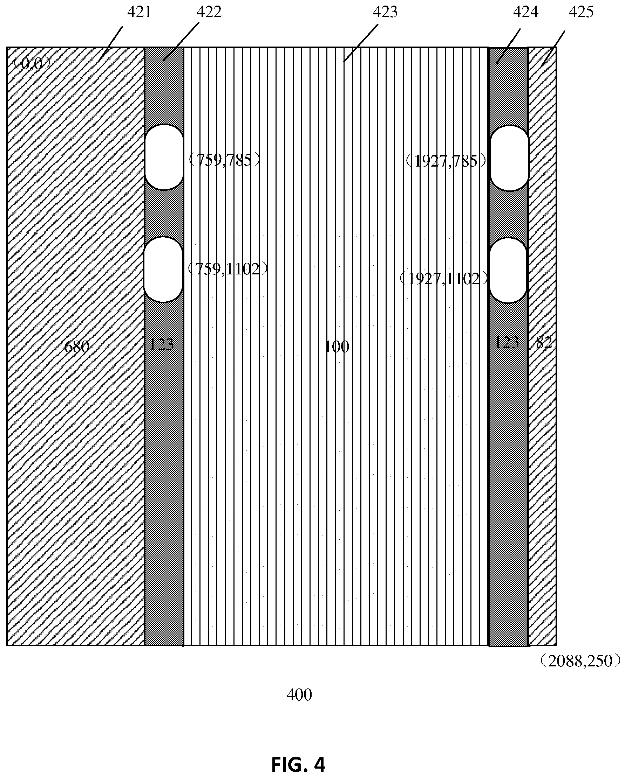

FIG. 4 is a schematic diagram illustrating division of a display area of a curved screen according to an exemplary embodiment of the disclosure. As illustrated in FIG. 4, the resolution of the curved screen 400 is 2088x2250. The resolutions of multiple display devices are 680x2250, 123x2250, 1080x2250, 123x2250 and 82x2250 respectively. The absolute areas, which are determined and formed by means of division of the curved screen 400 according to the resolutions of display areas of the multiple display devices, are an area 421, an area 422, an area 423, an area 424, and an area 425. The area 421 has a resolution of 680x2250, the area 422 has a resolution of 123 x2250, the area 423 has a resolution of 1080x2250, the area 424 has a resolution 123x2250 and the area 425 has a resolution 82x2250.

In the embodiment of the disclosure, by division of the above display areas of the curved screen, the viewport of each display device can correspond to a different respective display area of the curved screen, and the interface contents of the application scenario can be displayed in a display area of the curved screen corresponding to the viewport. Furthermore, multiple areas formed by the division can display interface contents of different application scenarios depending on the different viewports of the display device. For example, the area 421 can be used to display card flow information, such as information of flights and information of taking taxis. The area 422 can be used to display information of a navigation bar. The area 423 can display applications installed on a terminal device. The area 424 can display current state information of the terminal device. The area 425 can display or hide wallpaper of a surrounding curved screen.

Based on the same idea, a device for controlling screen display is also provided in the embodiments of the disclosure.

It can be understood that in order to implement the above functions, the device for controlling screen display provided in the embodiments of the disclosure includes a corresponding hardware structure and/or software module that performs each function. In combination with modules and algorithm operations of each example disclosed in the embodiments of the disclosure, the embodiment sof the disclosure may be implemented by hardware or a combination of the hardware and computer software. Whether a function is performed in a way of hardware or in a way that computer software drives the hardware depends on specific applications and constraints of a design in the technical solutions. Those skilled in the art can use a different method to implement the described functions for each specific application, but the implementation should not be considered as departing from the scope of the technical solutions in the embodiments of the disclosure.

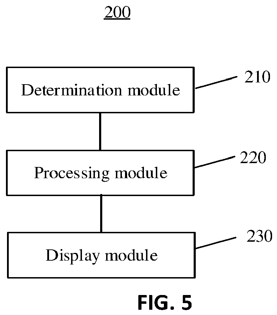

FIG. 5 is a block diagram illustrating a device for controlling screen display according to an exemplary embodiment of the disclosure. As illustrated in FIG. 5, a device for controlling screen display 200 is applied to a screen display device and includes a determination module 210, a processing module 220 and a display module 230.

The determination module 210 is configured to determine an application scenario of interface contents to be displayed and allocate a corresponding target display device to the application scenario. The processing module 220 is configured to process the interface contents of the application scenario to enable the processed interface contents of the application scenario to be displayed in a viewport of the target display device. The display module 230 is configured to display the processed interface contents of the application scenario in a display area corresponding to the viewport.

In an embodiment of the disclosure, the determination module 210 allocates the corresponding target display device to the application scenario by a following way: the target display device corresponding to a type of window that corresponds to the application scenario is allocated to the application scenario.

In an embodiment of the disclosure, the processing module 220 processes the interface contents of the application scenario by a following way to enable the processed interface contents of the application scenario to be displayed in the viewport of the target display device: a display size of the interface contents of the application scenario and a display position of the interface contents are determined according to the viewport of the target display device; and the interface contents of the application scenario are processed according to the display size and the display position.

In an embodiment of the disclosure, the display module 230 displays the processed interface contents of the application scenario in the display area corresponding to the viewport by a following way: when the target display device has more than one viewport, the interface contents of the application scenario displayed in the more than one viewport of the target display device are displayed, with or without an overlap, in the one or more display areas corresponding to the more than one viewport.

In an embodiment of the disclosure, the display module 230 displays, with an overlap, in the one or more display areas corresponding to the more than one viewport, the interface contents of the application scenario displayed in the more than one viewport of the target display device by a following way: a priority, according to which the more than one viewport of the target display device is displayed in the display areas, is determined; and the interface contents of the application scenario displayed in the more than one viewport of the target display device are displayed hierarchically in a same display area from outside to inside in a descending order of the priority.

In an embodiment of the disclosure, the priority is determined according to a priority set by a user; or the priority is determined according to sizes of the viewports, herein the priority of a small-size viewport is greater than the priority of a large-size viewport.

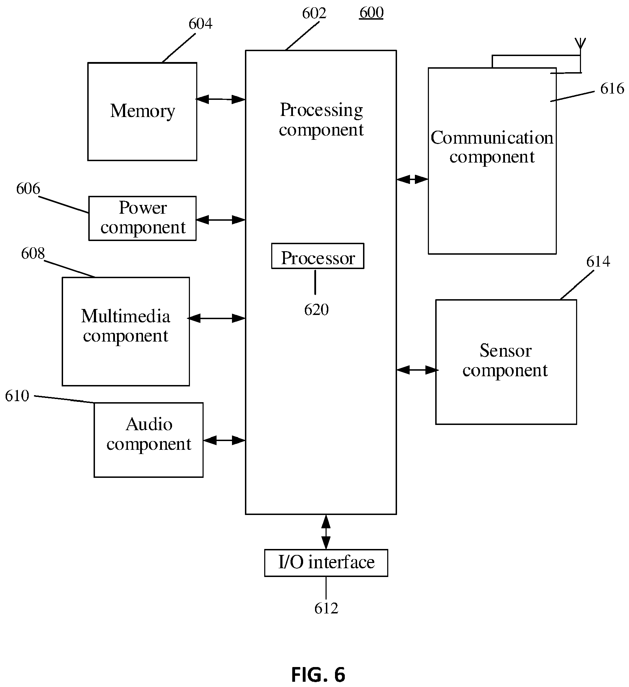

FIG. 6 is a block diagram of a device 600 for controlling screen display according to an exemplary embodiment. For example, the device 600 for controlling screen display may be a mobile phone, a computer, a digital broadcast terminal, a messaging device, a gaming console, a tablet, a medical device, exercise equipment and a personal digital assistant.

Referring to FIG. 6, the device 600 for controlling screen display may include one or more of the following components: a processing component 602, a memory 604, a power component 606, a multimedia component 608, an audio component 610, an Input/Output (I/O) interface 612, a sensor component 614, and a communication component 616.

The processing component 602 typically controls overall operations of the device 600 for controlling screen display, such as the operations associated with display, telephone calls, data communications, camera operations, and recording operations. The processing component 602 may include one or more processors 620 to execute instructions to perform all or part of the operations in the abovementioned method. Moreover, the processing component 602 may include one or more modules which facilitate interaction between the processing component 602 and the other components. For instance, the processing component 602 may include a multimedia module to facilitate interaction between the multimedia component 608 and the processing component 602

The memory 604 is configured to store various types of data to support the operation of the device 600 for controlling screen display. Examples of such data include instructions for any application programs or methods operated on the device 600 for controlling screen display, contact data, phonebook data, messages, pictures, video, etc. The memory 604 may be implemented by any type of volatile or non-volatile memory devices, or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, and a magnetic or optical disk.

The power component 606 provides power for various components of the device 600 for controlling screen display. The power component 606 may include a power management system, one or more power supplies, and other components associated with generation, management and distribution of power for the device 600 for controlling screen display.

The multimedia component 608 includes a screen providing an output interface between the device 600 for controlling screen display and a user. In some embodiments, the screen may include a Liquid Crystal Display (LCD) and a Touch Panel (TP). If the screen includes the TP, the screen may be implemented as a touch screen to receive an input signal from the user. The TP includes one or more touch sensors to sense touches, swipes and gestures on the TP. The touch sensors may not only sense a boundary of a touch or swipe action but also detect a duration and pressure associated with the touch or swipe action. In some embodiments, the multimedia component 608 includes a front camera and/or a rear camera. The front camera and/or the rear camera may receive external multimedia data when the device 600 for controlling screen display is in an operation mode, such as a photographing mode or a video mode. Each of the front camera and the rear camera may be a fixed optical lens system or have focusing and optical zooming capabilities.

The audio component 610 is configured to output and/or input an audio signal. For example, the audio component 610 includes a Microphone (MIC), and the MIC is configured to receive an external audio signal when the device 600 for controlling screen display is in the operation mode, such as a call mode, a recording mode and a voice recognition mode. The received audio signal may further be stored in the memory 604 or sent through the communication component 616. In some embodiments, the audio component 610 further includes a speaker configured to output the audio signal.

The I/O interface 612 provides an interface between the processing component 602 and a peripheral interface module, and the peripheral interface module may be a keyboard, a click wheel, a button and the like. The button may include, but not limited to: a home button, a volume button, a starting button and a locking button.

The sensor component 614 includes one or more sensors configured to provide status assessment in various aspects for the device 600 for controlling screen display. For instance, the sensor component 614 may detect an on/off status of the device 600 and relative positioning of components, such as a display and small keyboard of the device 600 for controlling screen display, and the sensor component 614 may further detect a change in a position of the device 600 for controlling screen display or a component of the device 600 for controlling screen display, presence or absence of contact between the user and the device 600 for controlling screen display, orientation or acceleration/deceleration of device 600 for controlling screen display and a change in temperature of the device 600 for controlling screen display. The sensor component 614 may include a proximity sensor configured to detect presence of an object nearby without any physical contact. The sensor component 614 may also include a light sensor, such as a Complementary Metal Oxide Semiconductor (CMOS) or Charge Coupled Device (CCD) image sensor, configured for use in an imaging application. In some embodiments, the sensor component 614 may also include an acceleration sensor, a gyroscope sensor, a magnetic sensor, a pressure sensor or a temperature sensor.

The communication component 616 is configured to facilitate wired or wireless communication between the device 600 for controlling screen display and another device. The device 600 for controlling screen display may access a communication-standard-based wireless network, such as a Wireless Fidelity (WiFi) network, a 2nd-Generation (2G) or 3rd-Generation (3G) network or a combination thereof. In an exemplary embodiment, the communication component 616 receives a broadcast signal or broadcast associated information from an external broadcast management system through a broadcast channel. In an exemplary embodiment, the communication component 616 further includes a Near Field Communication (NFC) module to facilitate short-range communication. For example, the NFC module may be implemented based on a Radio Frequency Identification (RFID) technology, an Infrared Data Association (IrDA) technology, an Ultra-WideBand (UWB) technology, a Bluetooth (BT) technology and another technology.

In an exemplary embodiment, the device 600 for controlling screen display may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, and is configured to execute the abovementioned method.

In an exemplary embodiment, there is also provided a non-transitory computer-readable storage medium including an instruction, such as the memory 604 including an indication, and the indication may be executed by the processor 620 of the device 600 for controlling screen display to implement the above-mentioned method for controlling the screen display. For example, the non-transitory computer-readable storage medium may be a Read-Only Memory (ROM), a Random Access Memory (RAM), a Compact Disc Read-Only Memory (CD-ROM), a magnetic tape, a floppy disc, an optical data storage device and the like.

A non-transitory computer-readable storage medium is provided. When an instruction in the storage medium is executed by a processor of a mobile terminal, the mobile terminal can perform any one of the above-mentioned methods for controlling screen display.

Other implementation solutions of the present disclosure will be apparent to those skilled in the art from consideration of the specification and practice of the present disclosure. This present application is intended to cover any variations, uses, or adaptations of the present disclosure following the general principles thereof and including such departures from the present disclosure as come within known or customary practice in the art. It is intended that the specification and examples be considered as exemplary only, with a true scope and spirit of the present disclosure being indicated by the following claims.

It will be appreciated that the present disclosure is not limited to the exact construction that has been described above and illustrated in the accompanying drawings, and that various modifications and changes may be made without departing from the scope thereof. It is intended that the scope of the present disclosure only be limited by the appended claims.

## Claims

1. A screen display device, **characterized in that** the screen display device comprises:
a curved screen (110), arranged on an obverse side, a lateral side and a reverse side of the screen display device and having a continuous curved surface;
a display sub-system (120), provided with viewports of a plurality of display devices, wherein the plurality of display devices are independent from each other and the viewport of each display device corresponds to a different respective display area of the curved screen; and
a display control processor (130) that allocates, to each of different application scenarios, a target display device corresponding to the application scenario, and processes interface contents of the application scenario and displays the processed interface contents of the application scenario in a viewport of the target display device to enable the interface contents of the application scenario to be displayed in a display area corresponding to the viewport.

2. The screen display device according to claim 1, wherein the display areas corresponding to the plurality of viewports do not overlap with each other, or partially overlap with each other.

3. The screen display device according to claim 1, wherein the plurality of display devices correspond to the viewports for displaying different types of windows; and
the different application scenarios correspond to different types of windows.

4. A method for controlling screen display, applied to a screen display device according to any one of claims 1 to 3, **characterized in that** the method comprises:
determining an application scenario of interface contents to be displayed and allocating a corresponding target display device to the application scenario (301);
processing the interface contents of the application scenario to enable the processed interface contents of the application scenario to be displayed in a viewport of the target display device (302); and
displaying the processed interface contents of the application scenario in a display area corresponding to the viewport (303).

5. The method for controlling screen display according to claim 4, wherein allocating the corresponding target display device to the application scenario comprises:
allocating, to the application scenario, the target display device corresponding to a type of window that corresponds to the application scenario.

6. The method for controlling screen display according to claim 4, wherein processing the interface contents of the application scenario to enable the processed interface contents of the application scenario to be displayed in the viewport of the target display device comprises:
determining a display size of the interface contents of the application scenario and a display position of the interface contents according to the viewport of the target display device; and
processing the interface contents of the application scenario according to the display size and the display position.

7. The method for controlling screen display according to claim 4, wherein displaying the processed interface contents of the application scenario in the display area corresponding to the viewport comprises:
when the target display device has more than one viewport, displaying, with or without an overlap in one or more display areas corresponding to the more than one viewport, the interface contents of the application scenario displayed in the more than one viewport of the target display device.

8. The method for controlling screen display according to claim 7, wherein displaying, with the overlap in the one or more display areas corresponding to the more than one viewport, the interface contents of the application scenario displayed in the more than one viewport of the target display device comprises:
determining a priority according to which the more than one viewport of the target display device is displayed in the display areas; and
displaying, hierarchically in a same display area from outside to inside in a descending order of the priority, the interface contents of the application scenario displayed in the more than one viewport of the target display device.

9. The method for controlling screen display according to claim 8, wherein the priority is determined according to a priority set by a user; or
the priority is determined according to sizes of the viewports, wherein the priority of a small-size viewport is greater than the priority of a large-size viewport.

10. A device for controlling screen display, applied to a screen display device according to any one of claims 1 to 3, **characterized in that** the device for controlling screen display comprises:
a determination module (210), configured to determine an application scenario of interface contents to be displayed and allocate a corresponding target display device to the application scenario;
a processing module (220), configured to process the interface contents of the application scenario to enable the processed interface contents of the application scenario to be displayed in a viewport of the target display device; and
a display module (230), configured to display the processed interface contents of the application scenario in a display area corresponding to the viewport.

11. The device for controlling screen display according to claim 10, wherein the determination module (210) allocates the corresponding target display device to the application scenario by a following way:
allocating, to the application scenario, the target display device corresponding to a type of window that corresponds to the application scenario.

12. The device for controlling screen display according to claim 10, wherein the processing module (220) processes the interface contents of the application scenario by a following way to enable the processed interface contents of the application scenario to be displayed in the viewport of the target display device:
determining a display size of the interface contents of the application scenario and a display position of the interface contents according to the viewport of the target display device; and
processing the interface contents of the application scenario according to the display size and the display position.

13. The device for controlling screen display according to claim 10, wherein the display module (230) displays the processed interface contents of the application scenario in the display area corresponding to the viewport by a following way:
when the target display device has more than one viewport, displaying, with or without an overlap in one or more display areas corresponding to the more than one viewport, the interface contents of the application scenario displayed in the more than one viewport of the target display device.

14. The device for controlling screen display according to claim 13, wherein the display module (230) displays, with an overlap in the one or more display areas corresponding to the more than one viewport, the interface contents of the application scenario displayed in the more than one viewport of the target display device by a following way:
determining a priority according to which the more than one viewport of the target display device is displayed in the display areas;
displaying, hierarchically in a same display area from outside to inside in a descending order of the priority, the interface contents of the application scenario displayed in the more than one viewport of the target display device.

15. The device for controlling screen display according to claim 14, wherein the priority is determined according to a priority set by a user; or
the priority is determined according to sizes of the viewports, wherein the priority of a small-size viewport is greater than the priority of a large-size viewport.
